# EUROPEAN PATENT APPLICATION

(11) **EP 2 136 065 A2**
(43) Date of publication of application: **23.12.2009**
(21) Application number: 09157965.6
(22) Date of filing: 15.04.2009
(51) Int. Cl.: F02M 31/18

(54) **Thick film resistor fuel vaporizer**

(30) Priority: 25.04.2008 US 150123
(71) Applicant: Delphi Technologies, Inc., Troy, Michigan 48007 (US)
(72) Inventor: Maier, Eugen, Clarkston, MI 48348 (US); Lecea, Oscar Alfonso, Grand Blanc, MI 48439 (US)
(74) Representative: Denton, Michael John

(57) **Abstract**

A fuel vaporizer includes at least one surface and at least one glass coated thick film resistor applied to the at least one surface. The thick film resistor heats the surface and liquid fuel vaporizes on contact with the heated surface. By employing glass coated thick film, the fuel vaporizer provides a compact and economical solution for generating heat on a large heat transfer surface area. By integrating a temperature sensor into each heating area, the temperature of each heating area may be monitored and controlled individually. By providing multiple heated surface and multiple heater stages, rapid and complete fuel vaporization is provided. The generated fuel vapor may be used for any number of exhaust after-treatment processes, such as in exhaust fuel injection, diesel particulate filter burnout by igniting the vapor to perform fast warm-up of a nitrogen oxide absorber, or as an oxidation catalyst.

## Description

### TECHNICAL FIELD

The present invention relates to a fuel reformer system that may be used in conjunction with internal combustion engines; more particularly, to apparatus and method for vaporizing fuel to create vapors to be used by the reformer system to produce hydrogen; and most particularly, to a thick film resistor fuel vaporizer.

### BACKGROUND OF THE INVENTION

Diesel fuel is a conventional hydrocarbon-based fuel used worldwide. It is used, for example, in diesel type internal combustion engines and for diesel aggregates in grid-independent power supplies. In combination with a reformer for generating hydrogen, diesel is the ideal fuel for many fuel cell applications, especially for solid oxide fuel cell systems.

Diesel engines typically are provided with exhaust after treatment devices to clean exhaust gases by trapping nitrogen oxides and carbon particulates formed during engine combustion. Traps for these contaminants, however, become sated with engine use and must be regenerated periodically.

Fuel reformers are well known in the art as devices for converting hydrocarbons into reformate rich in hydrogen and carbon monoxide. It is known to employ a fuel reformer in communication with an exhaust stream of a diesel type internal combustion engine to generate hydrogen on command by catalytic partial oxidation of hydrocarbon-based fuel, such as diesel fuel. Hydrogen is an excellent reductant for regeneration of nitrogen oxides and particulate traps. The produced reformate can be injected directly into a vehicle's exhaust system to achieve optimal regeneration and desulfation of an exhaust after treatment system and improves its emission reduction performance. Hydrogen generated during the fuel reformation process can further be used, for example, to generate ammonia and, thus, eliminate the need for an external reductant such as urea when using a selective catalytic reduction system.

In a typical reforming process, the hydrocarbon-based fuel is percolated with oxygen in the form of air through a catalyst bed or beds contained within one or more reactor tubes mounted in a reformer vessel. Fuel/air mixture preparation constitutes a key factor in the reforming quality of catalytic reformers, and also the performance of porous media combustors. For optimal dosage and reaction control, it is advantageous when the feed-in fuel is in gaseous form.

A problem in the prior art has been how to vaporize fuel completely and uniformly, especially at start-up when the apparatus or engine is cold. A related problem is that injected fuel droplets may follow a line-of-sight path directly to the entry surface of the catalyst, resulting in localized and sometimes extreme fuel/air inhomogeneities. Inhomogeneous fuel/air mixtures can lead to decreased reforming efficiency and reduced catalyst durability through coke and soot formation on the catalyst and thermal degradation from local hot spots. Poor fuel vaporization can lead to fuel puddling, resulting in uncertainty in the stoichiometry of fuel mixture. Complete and rapid fuel vaporization well ahead of the catalyst is a key step for achieving a homogeneous gaseous fuel-air mixture and consequent efficient reformate generation.

Getting the reformer to convert diesel fuel to hydrogen, a process for which there is a substantial commercial market, involves even more challenges, since diesel fuel is difficult to vaporize. The vaporization of diesel requires high temperatures, which lead to pyrolysis and coking (carbonaceous deposits). Also, the conversion reaction to hydrogen from diesel requires three elements - fuel, water/steam, and air - that must be present in specific proportions and must be very accurately mixed. Furthermore, during diesel vaporization, residue is typically formed, as opposed to with other liquid hydrocarbons.

In the prior art, it is known to vaporize injected fuel by preheating the incoming air stream to be mixed with the fuel, or by preheating a reformer surface for receiving a fuel spray. For example, one prior art approach includes spraying diesel fuel on a catalyst-coated grid where the more volatile components of the diesel fuel are partially oxidized upon addition of air/oxygen. The generated heat resulting from this process leads to the vaporization of the diesel fuel. However, the grid surface is limited and, thus, the amount of fuel that can be vaporized is limited as well.

Another prior art approach involves using a fuel vaporizer located at a position upstream of the fuel reformer and downstream of the fuel injection port. For example, a glow plug connected to an injection device has been used in the prior art as a vaporizer device. Injected fuel is directed to the enclosed glow plug through a piping and check valve system. Disadvantages of this approach include, for example, that glow plugs typically are not capable of supplying sufficient power to vaporize the required amount of diesel fuel, since glow plugs do not have the required surface area to transfer the required energy. The fuel is injected into a cavity from where it is conducted to the vaporizer through a piping system. As a result, the volume of fuel that does not reach the glow plug and, therefore, remains in a liquid state, may be increased and a fuel purge cycle may be required.

What is needed in the art is a device that enables reliable, complete, and sufficient vaporization of hydrocarbon-based fuels, and especially, of diesel fuel.

It is a principal object of the present invention to provide a fuel vaporizer that utilizes high energy density heaters having a large vaporizing surface in a small package.

It is a further object of the invention to provide a method for rapid, complete, efficient, and adjustable fuel vaporization.

### SUMMARY OF THE INVENTION

Briefly described, a diesel fuel vaporizer provides vaporized diesel fuel for a diesel type internal combustion engine that has a fuel reformer. The vaporized diesel fuel may be used, for example, in an exhaust gas after treatment process. A glass coated thick film resistor that generates heat on a large heat transfer surface area is employed in accordance with the invention. A printed temperature sensor may be applied to the heated surface to monitor the temperature. The temperature of the fuel vaporizer in accordance with the invention may be adjusted as needed by a control unit of a fuel reformer using the input of the temperature sensor, which may be a resistance temperature detector printed on the vaporizer's surface.

The fuel vaporizer in accordance with the invention is a compact construction that offers a large vaporizing surface with high-energy heaters in a small package. The fuel vaporizer is located at a position upstream of the fuel reformer and downstream of a fuel injection port. A commercially available fuel injector is well insulated from the thermal effects produced by the vaporizer and the fuel reformer is able to deliver a metered quantity of fuel as required by the reformer. The reformer's control unit may also control the fuel injector. The large heating surface of the fuel vaporizer in accordance with the invention and the high wattage capability of the thick film resistor printed or painted on the surface of the vaporizer assure the rapid and complete vaporization of the fuel injected into the vaporizer. After the vaporizing cycle is completed, a pulse of pressurized air is injected into the vaporizer cavity to purge the remaining fuel vapors preparing the space for the next vaporizing cycle by regenerating the heated surfaces.

Contrary to prior art fuel vaporizers, the fuel vaporizer in accordance with the invention provides a much simpler and more effective solution for vaporizing hydrocarbon-based fuels and, especially, diesel fuels. The fuel vaporizer in accordance with the invention has a simple construction and is easy to fabricate and assemble in automatic production lines and, therefore, more economical than prior art vaporizers. By utilizing a thick film resistor printed on the surface of the fuel vaporizer and by designing the vaporizer to have a large surface, energy is used efficiently to vaporize the fuel. The fuel vaporizer may have a modular construction and offers flexibility in operation and mounting.

In a first embodiment, the fuel vaporizer in accordance with the invention includes an internal and an external heater body. The external heater body has a glass coated thick film resistor painted on the cylindrical diameter surface. The internal heater body is a specially shaped conical cylinder with a layer of glass coated thick film resistors applied on both the inside and the outside. The two heater bodies form an annular cylindrical cavity that receives the fuel spray from the injector. The hot surfaces vaporize the diesel fuel on contact. The generated diesel vapor escapes through a plurality of holes in the heater bodies into the hydrogen reformer.

In a second embodiment, the fuel vaporizer in accordance with the invention includes a plurality of heater plates, preferably discs that have a glass coated thick film resistor printed or painted on the surface. The heater plates include a plurality of holes placed in such a way that the injected fuel and generated vapors cascade from one plate to another. Accordingly, the injected fuel is contacting multiple hot surfaces in order to achieve complete vaporization of the injected fuel. The hot surfaces of the plates vaporize the fuel on contact. The design allows both sides of the heater plate to be utilized for heat transfer. Current cylindrical heaters can only utilize the inside or the outside of the heater, thus, reducing surface area while allowing heat loss to the environment.

In a third embodiment, the fuel vaporizer in accordance with the invention includes an aluminum-extruded heat exchanger having two flat parallel surfaces connected on the sides with a radius wall on each end of the profile. A series of ribs extending from one surface to the other connects the two parallel surfaces over the full length of the heat exchanger. One end of the heat exchanger is connected to a manifold, which distributes fuel coming from a metering device, such as an injector or metering positive displacement pump, equally to each of the internal passages in the heat exchanger. The two outer parallel surfaces may be coated with an electrically non-conductive material on which electrically resistive ink can be applied. The ink may be applied in a pattern such that when a current is applied to the ink, the heat generated by the resistance evenly heats the substrate. A number of ink patterns may be applied to the length of the heat exchanger's outer surface creating heating zones, which may be controlled by applying varying voltages or duty cycles with a control system. The temperature for each zone may be monitored by printing a resistance temperature detector device within each zone. The end of the heat exchanger opposite to the inlet manifold may be oriented in such a way as to release the vapor generated by the vaporizer into any desired chamber. For example, the outlet end of the heat exchanger could be affixed with a device designed for the rapid diffusion of the vapor into the receiving chamber. Alternately to injecting pressurized air into the vaporizer cavities to purge the remaining fuel vapors, the remaining fuel may be pumped into the fuel tank return lines.

### BRIEF DESCRIPTION OF THE DRAWINGS

These and other features and advantages of the invention will be more fully understood and appreciated from the following description of certain exemplary embodiments of the invention taken together with the accompanying drawings, in which:
FIG. 1 is a cross-sectional view of a first fuel vaporizer assembly in accordance with the invention;
FIG. 2 is a cross-sectional view of an alternate embodiment of the first fuel vaporizer assembly in accordance with the invention;
FIG. 3 is a cross-sectional view of a second fuel vaporizer in accordance with the invention;
FIG. 4 is a plan view of a fuel inlet heater plate of a second fuel vaporizer assembly in accordance with the invention;
FIG. 5 is a plan view of a second stage heater plate of the second fuel vaporizer in accordance with the invention;
FIG. 6 is a plan view of a vapor exit heater plate of the second fuel vaporizer in accordance with the invention;
FIG.7 is a cross-sectional front view of a third fuel vaporizer assembly in accordance with the invention;
FIG.8 is a cross-sectional side view of the third fuel vaporizer assembly in accordance with the invention; and
FIG. 9 is a partial isometric view of a vaporizer of the third vaporizer assembly in accordance with the invention.

Corresponding reference characters indicate corresponding parts throughout the several views. The exemplification set out herein illustrates preferred embodiments of the invention, in one form, and such exemplification is not to be construed as limiting the scope of the invention in any manner.

### DESCRIPTION OF THE PREFERRED EMBODIMENTS

While this invention is described in the context of a diesel fuel vaporizer that provides vaporized diesel fuel to be used in an exhaust after-treatment process of a diesel type internal combustion engine that includes a hydrogen reformer system, it should be understood that the fuel vaporizer as described below may be utilized for vaporization of any hydrocarbon-based fuel for a variety of applications, including, but not limited to, fueling a solid-oxide fuel cell system and spark-ignited or diesel engines, and may further be utilized for vaporizing any liquid for use in a subsequent process.

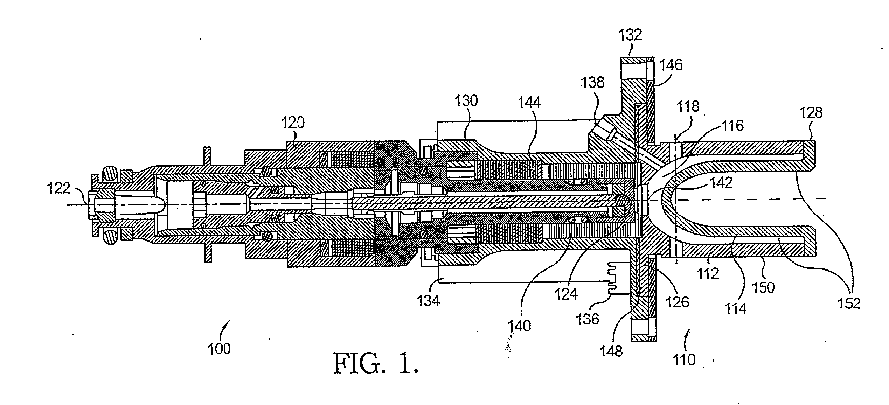

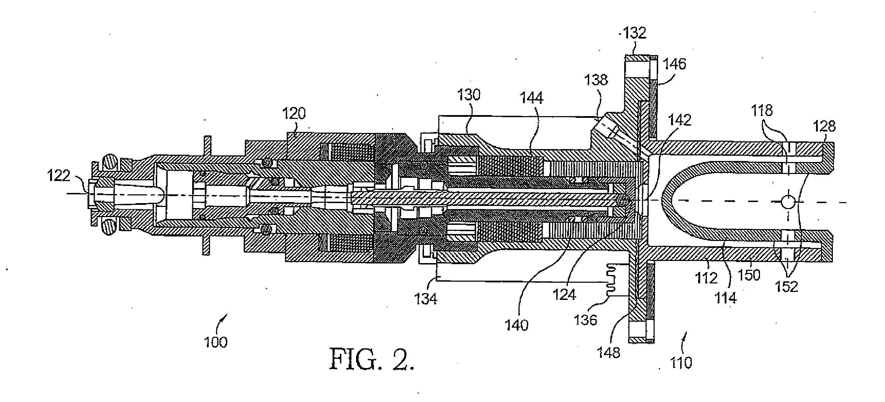

Referring to FIGS. 1 and 2, a first fuel vaporizer assembly 100 in accordance with the invention includes a first fuel vaporizer 110 and a fuel injector 120, both assembled into a flanged housing 130 at opposite sides. Fuel injector 120 extends from a fuel inlet 122 to a fuel outlet 124. Fuel injector 120 is assembled into flanged housing 130 through an insulating ceramic adapter 140 such that fuel outlet 124 is inserted into ceramic adapter 140. Fuel injector 120 may be any known fuel injector.

To reduce heat transfer from vaporizer 110 and from a fuel reformer (not shown) positioned downstream of vaporizer 110 to the body of injector 120, injector 120 is separated from fuel vaporizer 110 and the fuel reformer by a thermal insulation 144, such as a thermally insulating gasket, that is installed between injector 120 and housing 130 by way of a dedicated cavity or cavities.

Housing 130 includes an assembly flange 132 to connect first fuel vaporizer assembly 100 with a fuel reformer body (not shown). Flange 132 is thermally insulated from the fuel reformer by a thermally insulating gasket 146 installed between flange 132 and the fuel reformer. Another thermally insulating gasket 148 separates vaporizer 110 from assembly flange 132 to inhibit heat transfer from vaporizer 110 to flange 132, housing 130, and injector 120. Housing 130 includes further a plurality of cooling fins 134 extending from the outer circumference of housing above flange 132 that dissipate the heat that might still be transmitted through thermally insulating gaskets 146 and 148. Flange 132 is designed to receive fuel vaporizer 110. An electrical connector 136 that is used to power the thick film resistors 150 and 152 of vaporizer 110 is positioned on assembly flange 132 outside of housing 130. Thermal insulation may not be limited to thermally insulating gaskets.

First fuel vaporizer 110 includes an external heater body 112, an internal heater body 114, and a cavity 116 formed in between. External heater body 112 may have a cylindrical shape. External heater body 112 may include a flange 126 that is received by assembly flange 132. An air connection 138 may be integrated into flange 132 of housing 130 and into flange 126 of external heater body 112 and may provide a passage for pressurized air, which may be used to purge and regenerate the heated surfaces of vaporizer 110. Accordingly, air connection 138 extends through housing 130 and through external heater body 112 into cavity 116. Other locations for air connection 138 may be possible. A glass coated thick film resistor 150 may be applied, for example, printed or painted, to the outer circumferential surface of external heater body 112.

Internal heater body 114 is attached to external heater body 112 such that annular cylindrical cavity 116 is formed between them. A gasket 128 may be provided where external heater body 112 meets internal heater body 114. Internal heater body 114 may be a specially shaped conical cylinder as shown in FIGS. 1 and 2, but is not limited to any specific shape. The top of internal heater body 114 may have an ovoid shape that allows the sprayed fuel to get in contact fast with a large surface area of the hot surfaces of vaporizer 110. A layer of a glass coated thick film resistor 152 may be applied to both the inside and the outside of internal heater body 114. Thick film resistors 150 and 152 may be powered through electrical connector 136 positioned outside of vaporizer 110.

Fuel supplied by fuel injector 120 may be sprayed through a fuel spray inlet 142 into cavity 116 formed by external heater body 112 and internal heater body 114. Fuel spray inlet 142 may be formed by central openings in ceramic adapter 140 and external heater body 112. The surfaces of external heater body 112 and internal heater body 114 are heated by thick film vaporizers 150 and 152 and the hot surfaces vaporize the fuel on contact. The fuel vapor generated exits through a plurality of fuel vapor exit holes 118, for example, into a fuel reformer (not shown). Fuel vapor exit holes 118 may be incorporated only into external heater body 114 as shown in FIG.1 or into external heater body 112 and into internal heater body 116 as shown in FIG. 2. Other configurations of fuel vapor exit holes 118 may be possible. After a vaporizing cycle is completed, a pulse of pressurized air may be injected through air connection 138 into cavity 116 of vaporizer 110 to purge the remaining fuel vapors and preparing vaporizer 110 for the next vaporizing cycle.

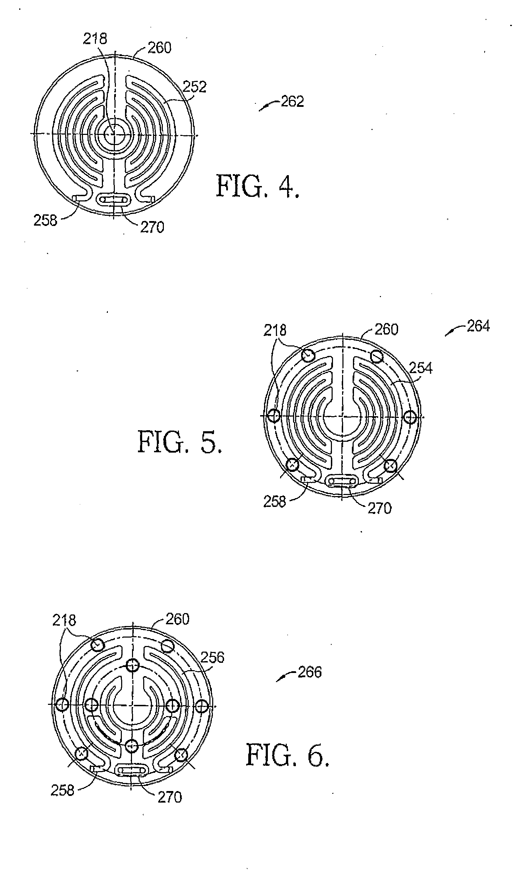

Temperature sensors 270 (as shown in FIGS. 4-6), such as resistance temperature detectors, may be printed on the surfaces of external heater element 112 and internal heater element 114 in the same way as the thick film resistors 150 and 152, respectively, and the temperature of the thick film resistors 150 and 152 may be adjusted as needed by a control unit, for example, of the fuel reformer (not shown). The control unit (not shown) may further control fuel injector 120 to enable delivery of a metered quantity of fuel to vaporizer 110 as required, for example, by the reformer.

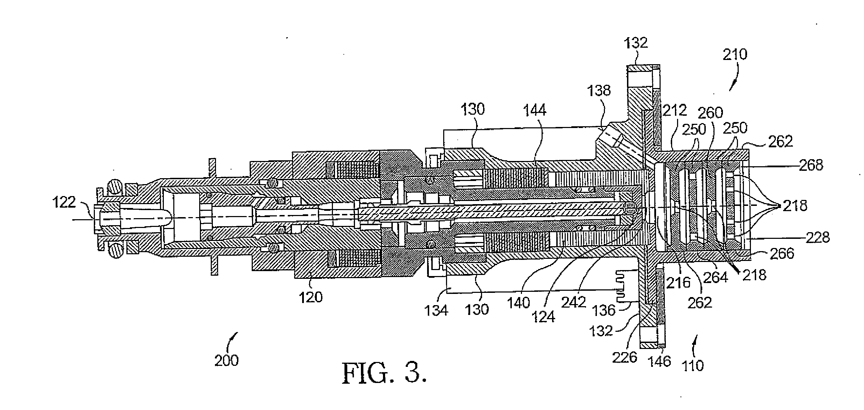

Referring to FIGS. 3 through 6, a second fuel vaporizer assembly 200 in accordance with the invention differs from first fuel vaporizer assembly 100 in such that second fuel vaporizer assembly 200 includes a second fuel vaporizer 210. Second fuel vaporizer 210 is assembled into flanged housing 130 in a similar fashion as first fuel vaporizer 110 as described above.

Second fuel vaporizer 210 includes a generally cylindrical external heater body 212 having a flange 226 and an open end 228 opposite from flange 226. External heater body 212 encloses a cavity 216. Flange 226 is received by assembly flange 132. An air connection 238 may be integrated into flange 132 of housing 130 and into flange 226 of external heater body 112 and may provide a passage for pressurized air, which may be used to purge and regenerate the heated surfaces of vaporizer 210. Accordingly, air connection 238 extends through housing 130 and through external heater body 212 into cavity 216. Other locations for air connection 238 may be possible.

Fuel supplied by fuel injector 120 may be sprayed through a fuel spray inlet 242 into cavity 216. Fuel spray inlet 242 may be formed by central openings in ceramic adapter 140 and external heater body 212.

Several heater plates 260 are horizontally inserted into external heater body 212 and held in place by a retaining ring 268 or another retaining feature. Each heater plate 260 has a glass coated thick film resistor 250 painted on the plates' surface that faces the fuel spray inlet 242. It may be possible to apply thick film resistor 250 to the surface of plates 260 that faces away from the fuel spray. Thick film resistor 250 may have a pattern that differs from one heater plate 260 to another heater plate 260. Each thick film resistor 250 includes a heater connector 258 that can be connected with electrical connector 136 (shown in FIG. 3) to power thick film resistors 250.

The heater plates 260 include a plurality of fuel and fuel vapor exit holes 218 placed in such a way that the injected fuel and generated vapors cascade from one plate 260 to another adjacent plate 260. Accordingly, the fuel is contacting multiple hot surfaces in order to achieve as complete vaporization of the injected fuel as possible. The heater plates 260 may have different configurations. Even though, heater plates 260 are shown in FIGS. 3-6 as disks, other shapes may be possible.

Temperature sensors 270, such as resistance temperature detectors, may be printed on the surface of heater plates 260 in the same way as the thick film resistors 250 and the temperature of the thick film resistors 250 may be adjusted as needed by a control unit, for example, of the fuel reformer (not shown). While heater plates 262, 264, and 266 are shown in FIGS. 4, 5, and 6, respectively, to include one temperature sensor 270, more than one temperature sensor 270 may be applied to each heater plate 260 if desired. Since each heater plate 260 includes a temperature sensor 270, the temperature of each heater plate 260 can be monitored and controlled individually by a control module, for example, of a reformer. Application of individual temperature sensors 270 for each heater plate 260 enables precise maintenance of the required temperature for fuel vaporization and prevention of overheating and burning of heater plates 260.

For example, heater plates 260 may include a fuel inlet heater plate 262 as shown in FIG. 4. Fuel inlet heater plate 262 (FIG. 4) may be positioned adjacent to fuel spray inlet 242. Fuel inlet heater plate 262 has a thick film resistor 252 applied to a surface and includes a fuel and fuel vapor exit hole 218 in the center. Exit hole 218 collects liquid fuel and directs the liquid fuel to the second stage heater plate 264, shown in FIG. 5. Further, a first amount of liquid fuel is vaporized on contact of the liquid fuel with the hot surface of fuel inlet heater plate 262, which is heated by thick film resistor 252. The obtained fuel vapor also passes through exit hole 218.

Second stage heater plate 264 as shown in FIG. 5 includes a plurality of fuel and fuel vapor exit holes 218. The exit holes 218 are preferably positioned proximate to the circumference of heater plate 264. Exit holes 218 of second stage heater plate 264 may have a smaller diameter than the center exit hole of fuel inlet heater plate 262. Second stage heater plate 264 further includes a thick film resistor 254. Thick film resistor 254 is shown to have the same pattern as thick film resistor 252 shown in FIG. 4, but a different pattern may be applied if desired. Thick film resistor 254 heats heater plate 264 and enables vaporization of liquid fuel coming from fuel inlet heater plate 262. The created fuel vapors and the remaining liquid fuel exit through exit holes 218 to reach the next stage heater plate 260.

A third stage heater plate 266 (FIG. 6) that may have the same configuration as fuel inlet heater plate 262 may be positioned following second stage heater plate 264. Again the remaining liquid fuel will be vaporized on contact and the remaining liquid fuel and the created fuel vapors exit through the center exit hole 218 to the next stage heater plate 260. Fuel inlet heater plate 262 and second stage heater plate 264 may be alternated as many times as required to achieve as complete fuel vaporization as desired.

The last stage heater plate is vapor exit heater plate 266 shown in FIG. 6 that is positioned following third stage heater plate 264 and proximate to open end 228 of external heater body 212. Vapor exit heater plate 266 includes a plurality of vapor exit holes 218. The number of vapor exit holes 218 may be larger than any number of exit holes 218 of the previous stage heater plates 262 and 264. Vapor exit heater plate 266 further includes a thick film resistor 256 for further vaporization of still remaining liquid fuel. The generated fuel vapors exit through exit holes 218 into, for example, a reformer (not shown). More or less than the four heater plates 260 shown in Fig. 3 may be used.

Since the liquid fuel cascades from heater plate 262 to heater plate 266, it may come in contact with both surfaces of each heater plate 262, 264, and 266, thereby increasing the vaporizing efficiency of second fuel vaporizer 210. Accordingly, the design of second fuel vaporizer 210 utilizes both sides of the heater plates 260 for heat transfer. After the vaporizing cycle is completed, a pulse of pressurized air may be injected through air connection 238 into cavity 216 to purge the remaining fuel vapors preparing the second fuel vaporizer 210 for the next vaporizing cycle.

Second fuel vaporizer 210 provides a large heating surface by employing multiple heater stages and high wattage capability to assure the rapid and complete vaporization of liquid fuel injected into second fuel vaporizer 210. The fuel and fuel vapor exit holes 218 enable communication between heater stages and permit fuel still in liquid state to reach the hot surface of the next heating stage and, therefore, enable completion of the vaporization process.

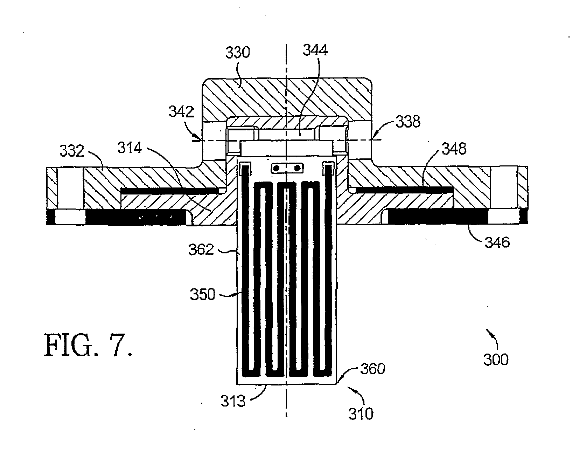

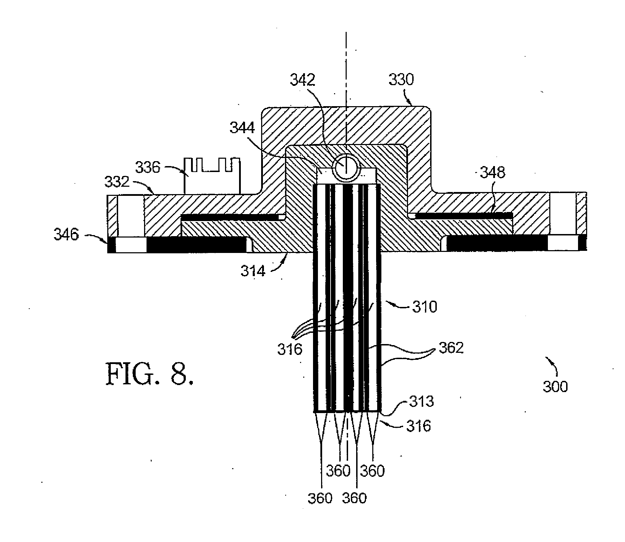

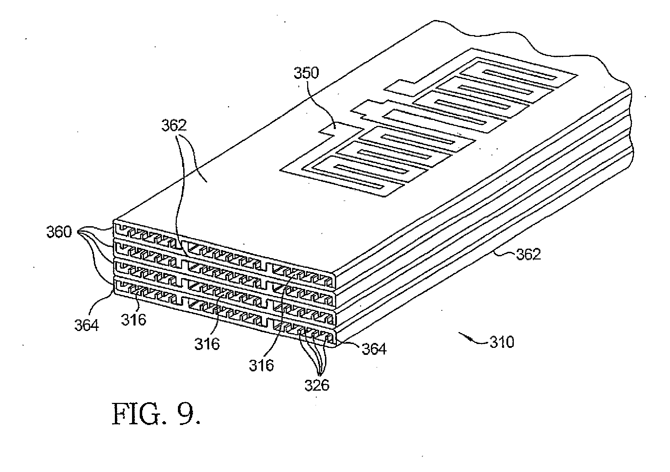

Referring to FIGS. 7 through 9, a third fuel vaporizer assembly 300 includes a third fuel vaporizer 310 including a plurality of axially arranged heater plates 360, a flanged heater plates holder 314 holding heater plates 360 in place, and a housing 330 including an assembly flange 332. Housing 330 and assembly flange 332 are adapted to receive heater plates holder 314. While in FIGS. 8 and 9 a plurality of heater plates 360 are shown, it may be possible to design fuel vaporizer 310 to include only one heater plate 360. Fuel vaporizer 310 is designed as a heat exchanger.

Each heater plate 360 may be a formed extruded single component having a plurality of passages 316 for a fluid, such as liquid fuel and fuel vapors, to flow though or may be an assembly of a plurality of components. Heater plates 360 may be formed from a variety of materials, including aluminum and stainless steel. Each heater plate 360, as shown in FIG. 9, may be extruded tubing having, for example, a rectangular cross-section. Preferably, the extruded tubing has two flat parallel surfaces 362 connected on the sides with a radius wall 364 on each end of the profile. Connecting the two parallel surfaces 362 are a series of ribs 326 that extend from one surface to the other over the full length of heater plate 360 forming passages 316. Heater plates 360 are preferably arranged in a stack such that a flat surface 362 of one plate 360 is positioned adjacent to and in contact with a flat surface of another plate 360, thereby forming multiple layers of passages 316 as shown in FIG. 9. This allows for a higher fuel flow through a shorter length fuel vaporizer 310 by increasing the residence time of the fluid on the heated surface.

One end of fuel vaporizer 310 is connected with an inlet manifold 344 formed by housing 330. Inlet manifold 344 equally distributes fuel coming from a metering device to each of the internal passages 316 formed in heater plates 360. An electrical connector 336 may be attached to assembly flange 332 outside of housing 330 to provide electrical connection for third fuel vaporizer 310. Housing 330 may include a fuel inlet 342 and an air connection 338. Thermal insulation is provided to prevent heat transfer from third fuel vaporizer 310 and from a downstream positioned device, such as a reformer (not shown) to housing 330 and other devices that may be positioned upstream of vaporizer 310. For example, a thermally insulating gasket 346 may be positioned between the reformer and the flanges of holder 314 and housing 330. Another thermally insulating gasket 348 may be installed between assembly flange 332 of housing 330 and the flange of holder 314. A fuel metering device, for example, an injector as shown in FIGS. 1 through 3 or a metering positive displacement pump may be in direct connection with third fuel vaporizer 310.

At least one surface 362 of each heater plate 360 is coated on the outside with an electrically non-conductive material on which electrically resistive ink forming a glass coated thick film resistor 350 is applied. The ink is applied in a pattern such that when a current is applied to the thick film resistor 350, heat generated by the resistance preferably evenly heats each heater plate 360. The ink pattern shown in FIGS. 7 and 9, are only examples. The layout, size, and location on surface 362 of the resistive ink pattern of each thick film resistor 350 may be varied as needed for a specific application.

A number of differently or equally shaped ink patterns forming a plurality of thick film resistors 350 may be applied to one or both surfaces 362 of each heater plate 360. Thereby, different heating zones that may be controlled individually by applying varying voltages or duty cycles can be created. Monitoring the temperature of each heating zone may be enabled by printing a temperature sensor, such as a resistance temperature detector 270, within each zone, similar as shown in FIGS. 4-6. A controller may be used to vary the voltage to each heating zone as needed to maintain a desired temperature and to protect the thick film resistor 350 from overheating and burning out.

Liquid fuel entering the heater body 312 through manifold 344 is vaporized on contact with the heated heater plates 360. An outlet end 313 of heater body 312 positioned opposite from the one installed in heater plates holder 314 includes fuel vapor exit holes 318 and is oriented such that generated fuel vapor may be released into an adjacent receiving chamber (not shown). The generated fuel vapor may be used for any number of exhaust after-treatment processes, such as in exhaust fuel injection, diesel particulate filter burnout by igniting the vapor to perform fast warm-up of a nitrogen oxide absorber, or as an oxidation catalyst. Outlet end 313 of heater body 312 may be affixed with a device designed for rapid diffusion of the vapor into the receiving chamber.

After the vaporizing cycle is completed, a pulse of pressurized air may be injected into heater body 312 through air connection 338 to purge the remaining fuel vapors preparing fuel vaporizer 310 for the next vaporizing cycle. An alternative approach of purging may be to pump the remaining fuel into the fuel tank return line.

By employing glass coated thick film resistors, the first, second, and third fuel vaporizers 110, 210, and 310, respectively, provide a compact and economical solution for generating heat on a large heat transfer surface area. By integrating a temperature sensor into each heating area, the temperature of each heating area may be monitored and controlled individually. By providing multiple heated surface and multiple heater stages, rapid and complete fuel vaporization is provided.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A fuel vaporizer, comprising:
at least one surface; and
at least one glass coated thick film resistor applied to said at least one surface, said thick film resistor heating said surface;
wherein fuel vaporizes on contact with said heated surface.

2. The fuel vaporizer of Claim 1, further including a heater body having a fuel inlet and a fuel vapor exit holes opposite from said fuel inlet,
wherein said heater body encloses said at least one surface, wherein liquid fuel enters said heater body through said fuel inlet, and wherein fuel vapor exits said heater body through said fuel vapor exit holes.

3. The fuel vaporizer of Claim 2, wherein said heater body further includes an air connection, and wherein pressurized air enters said heater body through said air connection.

4. The fuel vaporizer of Claim 1, wherein said at least one surface comprises the inside surface of an external heater body and the inside surface of an internal heater body, wherein said external heater body and said internal heater body form a cavity that receives said fuel, and wherein said glass coated thick film resistor is applied to an outer circumferential surface of said external heater body and to the inside and outside of said internal heater body.

5. The fuel vaporizer of Claim 1, wherein said at least one surface comprises a plurality of heater plates each including at least one fuel and fuel vapor exit hole, wherein said each of said heater plates includes one of said at least one glass coated thick film resistors, and wherein said heater plates are positioned such that said fuel and generated fuel vapors cascade through said at least one fuel and fuel vapor exit hole from one of said heater plates to another of said heater plates.

6. The fuel vaporizer of Claim 1, wherein said at least one surface comprises a plurality of axially arranged heater plates forming a plurality of passages that receive said fuel, and wherein at least one of said glass coated thick film resistors is applied to an outer surface of said heater plates.

7. The fuel vaporizer of Claim 1, further including at least one temperature sensor applied to said at least one surface.

8. A fuel vaporizer assembly for vaporizing a hydrocarbon-based fuel, comprising:
a housing having an assembly flange;
a fuel metering device assembled into said housing;
a fuel vaporizer assembled into said assembly flange and
including an external heater body, an internal heater body, and a cavity formed in between, said cavity receiving liquid fuel from said fuel metering device; and
a plurality of glass coated thick film resistors applied to a plurality of surfaces of said external heater body and said internal heater body, said thick film resistors heating said external heater body and said internal heater body;
wherein fuel vapors are generated on contact of said liquid fuel with said external heater body and said internal heater body.

9. The fuel vaporizer assembly of Claim 8, further including thermal insulation, wherein said thermal insulation is positioned between said assembly flange and said external heater body, between said housing and said fuel metering device, and between said assembly flange and a downstream device.

10. The fuel vaporizer assembly of Claim 8, further including an air connection integrated into said housing and said external heater body, said air connection providing a passage for pressurized air into said cavity formed in between said external heater body and said internal heater body.

11. A fuel vaporizer assembly for vaporizing a hydrocarbon-based fuel, comprising:
generally cylindrical heater body enclosing a cavity;
an air connection integrated into said heater body, said air connection providing a passage for compressed air into said cavity;
a plurality of heater plates horizontally inserted into said heater body and retained within said heater body, each of said heater plates including at least one fuel and fuel vapor exit hole;
a plurality of glass coated thick film resistors applied to said heater plates; and
a plurality of temperature sensors, wherein one of said temperature sensors is applied to each of said heater plates;
wherein said cavity receives said hydrocarbon-based fuel in liquid form;
wherein fuel vapors are generated on contact of said fuel with said heater plates; and
wherein said fuel and said fuel vapors cascade from one of said heater plates to an adjacent heater plate through said exit holes.

12. The fuel vaporizer assembly of Claim 11, wherein a first stage heater plate is a fuel inlet heater plate positioned adjacent to a fuel inlet integrated into said heater body, said fuel inlet heater plate including a center fuel and fuel vapor exit hole, one of said glass coated thick film resistors, and one of said temperature sensors, wherein said fuel inlet heater plate is also a third stage heater plate.

13. The fuel vaporizer assembly of Claim 12, wherein a second stage heater plate includes a plurality of fuel and fuel vapor exit holes positioned proximate to a circumference of said plate, one of said glass coated thick film resistors, and one of said temperature sensors, said second stage heater plate receiving said fuel and said fuel vapors from said first stage heater plate.

14. The fuel vaporizer assembly of Claim 12, wherein a fourth stage heater plate is a vapor exit heater plate positioned proximate to said open end of said housing, said vapor exit heater plate including a plurality of fuel vapor exit holes, one of said glass coated thick film resistors, and one of said temperature sensors, said fourth stage heater plate receiving said fuel and said fuel vapors from said third stage heater plate, wherein the number of fuel vapor exit holes is higher than the number of said fuel and fuel vapor exit hole of said first stage and said second staged heater plates.

15. A fuel vaporizer assembly, comprising:
at least one heater plate being formed from at least one extruded component and including a plurality of passages for a fluid to flow through;
a flanged housing including an inlet for said fluid and an air connection and forming an inlet manifold;
a heater plate holder receiving said at least one heater plate,
wherein said heater plate holder is installed in said flanged housing;
a plurality of glass coated thick film resistors applied to an outside of said at least one heater plate, wherein said thick film resistors create a plurality of different heating zones; and
a temperature sensor positioned within each of said heating zones;
wherein said fluid enters said passages through said inlet in liquid form, is vaporized on contact with said at least one heater plate, and exits said passages in vapor form.
